# EUROPEAN PATENT APPLICATION

(11) **EP 0 682 394 A1**
(43) Date of publication of application: **15.11.1995**
(21) Application number: 95105146.5
(22) Date of filing: 06.04.1995
(51) Int. Cl.: H02G 3/04

(54) **Wall- or skirting board-type trunking for electrical cables**

(30) Priority: 13.05.1994 IT GE940058
(71) Applicant: BOCCHIOTTI SOCIETA'PER L'INDUSTRIA ELETTROTECNICA S.P.A., I-16121 Genova (IT)
(72) Inventor: Reggio d'Aci, Franco, I-22059 Robbiate (Como) (IT)
(74) Representative: Porsia, Attilio, Dr.

(57) **Abstract**

Trunking for electrical cables or the like comprising: distribution trunking provided with a back part that fixes to a wall and with two lateral walls that extend perpendicularly from said back, said lateral walls each having a groove in the longitudinal direction; and a cover consisting of a closing strip and two lateral flanges extending from said strip, each of the two lateral flanges having insertion means for insertion into said grooves in said lateral walls of the distribution trunking; said insertion means are formed by the free ends of the lateral flanges of the cover which are bent in towards the interior of said cover, and said grooves along the lateral walls of the distribution trunking are formed a certain distance from the back of the distribution trunking and are complementary in section to the section of the ends of said lateral flanges of the cover.

## Description

The present invention relates to trunking for cables, especially so-called wall- or skirting board-type cable trunking.

Wall- and skirting board-type cable trunking is already known; such trunking is often designed for user environments in which the practicalities of the ducted electrical system must be combined with a reasonable aesthetic effect, as in the case of offices and private homes.

Cable trunking as described above often takes the form of distribution trunking subdivided into a number of compartments, usually differing in dimensions from each other, together with a cover which differs depending on whether the trunking is mounted on a wall, running vertically, or in a skirting board position, along the wall parallel with and close to the floor; the trunking and the cover are often extruded from a plastic material.

Trunking and cover are fixed together by means of the insertion of a rib which projects in from the lateral flanges of said cover into a groove formed along the lateral walls of the distribution trunking. This kind of fixing often makes it difficult to remove the cover.

Another problem with such trunking has to do with irregularities in the surface of the walls and/or floor, which make it difficult to install said trunking.

The object of the present invention is therefore wall- or skirting board-type cable trunking having a cover, in which this cover is fastened to the trunking in a stable, safe and easily removable manner, and which can at the same time be installed on walls and floors that are not entirely even.

The object of the invention is also to provide such cable trunking with compartment closures that will be easy to fix, stable once fixed and also easy to open and reclose, so that access to the compartments is improved.

Further advantages and features will be clear from the following detailed description of an embodiment of the present invention. This description is provided by way of illustration, with no restriction being implied, and refers to the accompanying drawings in which:
Figure 1 is a transverse section of wall-type trunking for cables according to the invention;
Figure 2 is a transverse section of skirting board-type trunking for cables according to the invention; and
Figures 3A, 3B and 3C are enlarged details showing the application of the compartment closures for cable trunking according to the invention.

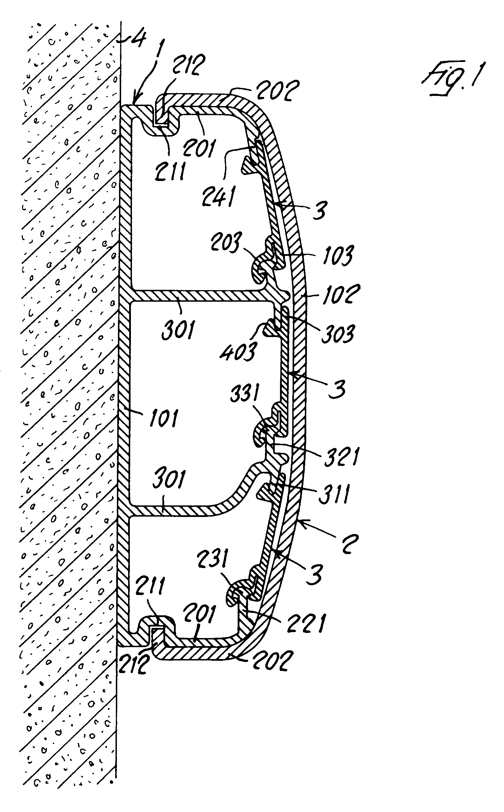

In Figure 1, the numeral 1 indicates the distribution trunking of trunking for electrical cables according to the invention. This distribution trunking 1 consists of a back 101 fixed to a wall 4, from which back 101 there extend two lateral walls 201. The space defined by the back 101 and walls 201 is subdivided internally by a series of dividing walls 301 (of which there are two in the case illustrated) that divide this space into compartments differing in this case in cross section from each other. Close to the point where the lateral walls 201 join the back 101, each has an approximately U-shaped groove 211, the purpose of which will be described later. The free ends of said lateral walls 201 extend towards the interior of the distribution trunking 1, parallel with the back 101, to form flanges - either 221 or 241. In particular the free end of the flange 221 terminates in the mushroom swelling 231, while the free end of the opposite wall 201 forms the flange 241. The basically T-shaped free ends of the dividing walls 301 form two flanges parallel with the back 101 and extending in opposite directions. In particular, extending towards the mushroom swelling of the flange 221 of the lateral wall 201 is a flange 311 similar in section to the flange 241. Conversely, opposite the flange 241 of the opposing lateral wall is the swelling 331 of a flange 321 similar to the swelling 231 of the flange 221; in general, even in intermediate positions, a flat-sectioned flange will be opposite a mushroom swelling. To cover the compartments described above, compartment closures 3 are fitted; these compartment closures are fixed to said distribution trunking 1 by inserting the swellings 231, 331 between the two parts 103, 203 and inserting the flanges 241, 311 between the parts 303, 403 as will be described later. To completely cover the distribution trunking 1, the cover 2 is used: this consists of a closing strip 102 with two lateral flanges 202 whose free ends 212 are bent in parallel with said closing strip 102 and inserted into their respective opposing grooves 211.

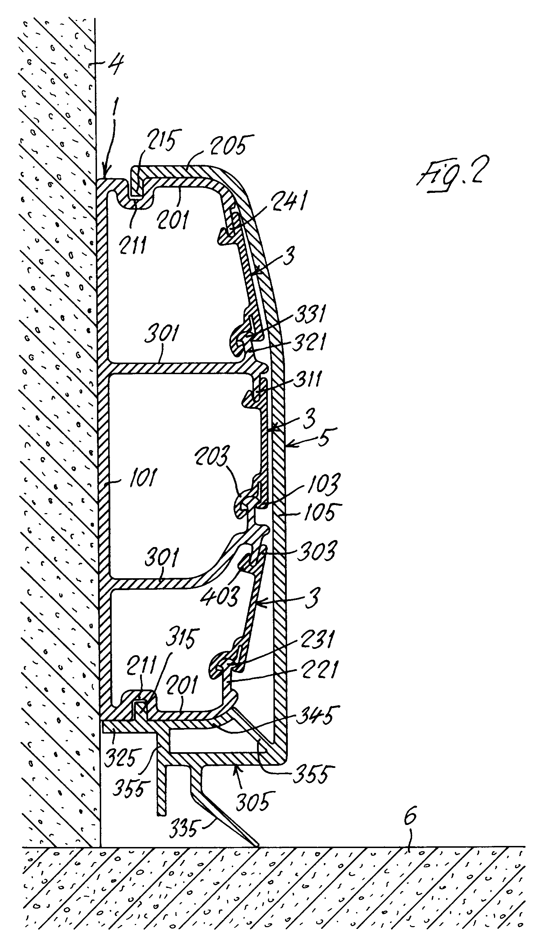

In Figure 2 the cable trunking according to the invention comprises distribution trunking 1 similar to that illustrated in Fig. 1. The same parts can be seen here again, bearing the same numerals. The cover 5 of the trunking, however, is a skirting board-type cover. This cover 5 has a lateral flange 205 along its side furthest from the floor 6, the free end 215 of which flange bends in towards the groove 211 and is inserted into it, as described previously. Along the opposite side, the closing strip 105 has a flange 305 connected by two distance pieces 355 to a flange 345 which provides contact with the outer surface of the distribution trunking 1, and in particular with a wall 201. Extending from the flange 345, near the free end 325 and at right angles thereto, is the rib 315 which inserts into the groove 211 in the lateral wall 201. From the lateral flange 305 there extends, towards the floor, an apron 355 whose purpose will be described below.

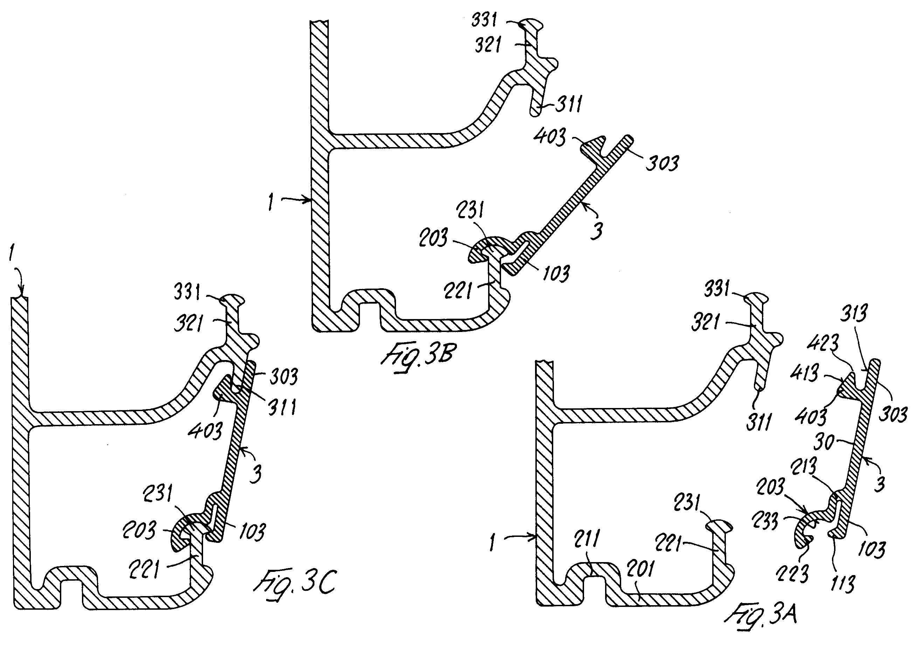

In Figures 3A, 3B and 3C, the compartment closure 3 and the manner in which it is used are shown in detail. In Fig. 3A the compartment closure comprises the strip 30 which can completely or partly cover the compartment defined by the dividing wall 301 and lateral wall 201. Along one lateral edge of the strip 30 is a flange 103 that defines, with the part 203, the recess 233 that is to accommodate the mushroom swelling 231 projecting from the flange 221 of the wall 201; the teeth 223, 113 hold this swelling 231 in the recess 233, the handle extending from the part 213 with the strip 30 giving said teeth their elastic grip. Along the opposite edge the flange 303 defines with the part 403 the cavity 313 that will house the flange 311. The part 403 includes the surface 413 to assist the insertion of the flange 311 into the cavity 313, and the tooth 423 to keep it in place. Obviously, embodiments in which the parts denoted by the numerals 231, 311 are replaced by those denoted by the numerals 331, 311, or 331, 241 can be regarded as analogous.

The following will make it clear how the cable trunking works. The distribution trunking 1 is fixed to the wall 4 in whatever way is most suitable, following known methods. Electrical, telephone, television and other such cables are installed in said trunking. The distribution trunking 1 is then closed with the cover 2 by inserting one of the two ends 212 of the lateral flanges 202 of said cover into its respective groove 211, after which moderate pressure applied to the closing strip 102 of said cover results in complete closure thereof with the insertion of the end 212 of the opposite flange 202 in its groove 211. The trunking will thus be firmly closed; advantageously, a suitable tool (e.g. a screwdriver) can be inserted between the edge of the groove 211 and the end 212 of the flange 202 in order to open the trunking for the purpose of replacing and/or carrying out maintenance on the cables inside. Furthermore, with this kind of closure, any unevenness in the wall 4 will not affect the stability of the cover 2.

However, should the trunking be in the so-called skirting-board position, it will have a cover 5 instead. In this cover, the edge furthest from the floor 6 is connected to the trunking 1 in exactly the same way as described above, by inserting the end 215 of the flange 205 in the groove 211. Along the edge nearest the floor, however, is the rib 315 projecting perpendicularly from the flange 345 to fit into the groove 211, while the end 325 of said flange continues as far as the back 101 of the trunking 1. Advantageously , as previously described, there extends from the flange 305 an apron 335, inclined with respect to said flange and with respect to the floor, its purpose being to absorb the unevennesses in the floor 6 in such a way as to attenuate, where necessary, the misalignment between this skirting board-type trunking and the floor.

Figures 3A-3C show how the compartment closure 3 works. As already illustrated, this compartment closure 3 has recesses 233, 313 for housing, respectively, mushroom swellings such as 231 and 331, and flanges such as 311 and 241. The mushroom swelling 231 (as in Fig. 3B) is first inserted into the recess 233 with pressure; the teeth 113 and 223 hold it in its seat, and the shape of the swelling, combined with that of the recess 233, enables the resulting "hinged" compartment closure to move through a relatively wide angle. Then, as the opposite edge of the compartment closure 3 is pressed down, the surface 413 of the part 403 helps the flange 311 to slide into the recess 313 (Fig. 3C), so that this flange is now held in said cavity by the tooth 423. The resulting compartment closure is stable and consequently secures the cables long-term inside the individual compartments, being very useful, therefore, both when the cover 2, 5 has to be removed and when installing vertical lengths of cable trunking. Moreover, thanks to its closure system described above, this compartment closure allows easy access to the contents of the various compartments.

In this way the cable trunking according to the invention is able to minimize the problems of uneven walls and floors. Said trunking advantageously has compartment closures that can easily be opened and reclosed.

## Claims

1. Trunking for electrical cables or the like comprising: distribution trunking provided with a back part that fixes to a wall and with two lateral walls that extend perpendicularly from said back, said lateral walls each having a groove in the longitudinal direction; and a cover consisting of a closing strip and two lateral flanges extending from said strip, each of the two lateral flanges having insertion means for insertion into said grooves in said lateral walls of the distribution trunking, in which said insertion means are formed by the free ends of the lateral flanges of the cover which are bent in towards the interior of said cover, and said grooves along the lateral walls of the distribution trunking are formed a certain distance from the back of the distribution trunking and are complementary in section to the section of the ends of said lateral flanges of the cover.

2. Trunking for electrical cables according to Claim 1, characterized in that said trunking is of the so-called skirting board-type and in that that lateral flange of said cover which is nearest the floor has an apron that extends from said flange and is bent through some suitable angle.

3. Trunking according to Claim 2, in which said lateral flange has two distance pieces to which is connected a flange from which there extends at right angles a rib, the free end of said flange extending as far as the back of said distribution trunking.

4. Trunking according to any one of the previous claims, in which said distribution trunking is subdivided into a number of compartments by means of one or more dividing walls that extend from said back part parallel with said lateral walls of the distribution trunking.

5. Trunking according to Claim 4, in which said compartments each have a compartment closure piece.

6. Trunking for cables according to Claim 4, in which said lateral walls and said dividing walls have flanges extending towards the interior of said compartments, alternately with and without mushroom swellings, said compartment closures possessing cavities designed to engage with said flanges and said mushroom swellings of these flanges.
